# EUROPEAN PATENT APPLICATION

(11) **EP 4 450 136 A1**
(43) Date of publication of application: **23.10.2024**
(21) Application number: 24168370.5
(22) Date of filing: 04.04.2024
(51) Int. Cl.: A63F 13/213, G01S 7/4863, G01S 17/66, G06F 3/01, G01S 17/894

(54) **REDUCED RESOLUTION TIME-OF-FLIGHT SHAPE RECOGNITION**

(30) Priority: 18.04.2023 US 202318302308
(71) Applicant: STMicroelectronics International N.V., 1228 Plan-les-Ouates, Geneva (CH)
(72) Inventor: LABUSSIERE, Yann, 38400 SAINT MARTIN D'HERES (FR)
(74) Representative: Casalonga

(57) **Abstract**

A method of recognizing a shape using a multizone time-of-flight (ToF) sensor includes receiving, by a processor, ToF data indicating an object located within a field of view of the multizone ToF sensor, the field of view being divided into zones. The ToF data includes signal information corresponding to each zone of the field of view of the multizone ToF sensor. The ToF data may include a two-dimensional array of zone data, each of the zone data including distance information and additional signal information. The method further includes recognizing, by the processor, the object as the shape using the signal information. Recognizing the shape may include filtering, by the processor, the ToF data through an artificial intelligence (AI) model to create AI output data and recognizing the shape using the AI output data.

## Description

### TECHNICAL FIELD

The present invention relates generally to a system and method for time-of-flight (ToF) shape recognition, and, in particular embodiments, to a system and method for recognizing shapes with reduced resolution.

### BACKGROUND

Object recognition is used in a variety of applications to control electronic devices using the shape and/or motion (sometimes referred to as a gesture) of an object (e.g., a hand). The shape of a user or portion of a user may be referred to as a posture of the user. Object recognition can be used for contactless control of devices. Contactless device control can be more convenient in certain situations such as loud environments or when traditional control mechanisms such as a keyboard, computer mouse, touch screen, etc. are impractical or unavailable.

Additionally, contactless control can also be a more efficient control mechanism, especially when the device does not include or have room for other control functionality. For example, "smart" functionality is being added to an increasing number of small or basic electronic devices, some of which do not even have display screens. Further, many devices naturally operate at least a few feet away from the user, making contactless control an ideal control mechanism.

In order to use object shapes (e.g. user posture) as a control mechanism, the device must be able to quickly and accurately identify shapes. One common method of implementing shape recognition is to use a video camera (e.g. a webcam) to record video. Frames of the video can then be processed by the device (or even externally using cloud computing) to consider whether a particular frame or set of frames includes a particular shape. Each frame is stored as an array of pixels. Due to the complexity of recognizing a shape from a digital image, video camera-based shape recognition typically requires a large number of color pixels (e.g. RGB, YCbCr, etc.).

However, there are several disadvantages to video camera-based shape recognition. The large number of pixels, each having at least three data fields, results in high processing power. This increases power requirements, complexity, and can cause recognition to be slow, especially on less capable devices. Even more power is consumed by the requirement that a video camera always be on. Since video data is easily understood by the human eye, have the video camera on is also a privacy issue. Integration of a video camera-based shape recognition system into a device is very difficult. Consequently, a shape recognition solution that does not require a video camera is desirable.

### SUMMARY

In accordance with an embodiment of the invention, a method of recognizing a shape using a multizone time-of-flight (ToF) sensor includes receiving, by a processor, ToF data indicating an object located within a field of view of the multizone ToF sensor. The ToF data includes a two-dimensional array of zone data. Each of the zone data corresponds to a zone of the field of view of the multizone ToF sensor and includes distance information and additional signal information. The method further includes recognizing, by the processor, the object as the shape using the distance information and the additional signal information of the two-dimensional array.

In accordance with another embodiment of the invention, a method of recognizing a shape using a multizone time-of-flight (ToF) sensor includes receiving, by a processor, ToF data indicating an object located within a field of view of the multizone ToF sensor, the field of view being divided into zones. The ToF data includes signal information corresponding to each zone of the field of view of the multizone ToF sensor. The method further includes filtering, by the processor, the ToF data through an artificial intelligence (AI) model to create AI output data, and recognizing, by the processor, the object as the shape using the AI output data.

In accordance with still another embodiment of the invention, a shape recognition device includes a multizone time-of-flight (ToF) sensor including a field of view divided into zones and configured to generate ToF data indicating an object located within the field of view of the multizone ToF sensor, and a processor coupled to the multizone ToF sensor. The processor is configured to receive the ToF data from the multizone ToF sensor, filter the ToF data through an artificial intelligence (AI) model to create AI output data, and recognize the object as a shape using the AI output data. The ToF data includes signal information corresponding to each zone of the field of view of the multizone ToF sensor.

### BRIEF DESCRIPTION OF THE DRAWINGS

For a more complete understanding of the present invention, and the advantages thereof, reference is now made to the following descriptions taken in conjunction with the accompanying drawings, in which:
FIG. 1 illustrates an example shape recognition device that includes a multizone ToF sensor coupled to a processor in accordance with embodiments of the invention;
FIG. 2 illustrates an example shape recognition system that includes a multizone ToF sensor configured to recognize an object as a shape within the field of view of the multizone ToF sensor in accordance with embodiments of the invention;
FIG. 3 illustrates an example ToF signal in accordance with embodiments of the invention;
FIG. 4 illustrates example ToF data in accordance with embodiments of the invention;
FIG. 5 illustrates an example method of recognizing a shape using a multizone ToF sensor in accordance with embodiments of the invention;
FIG. 6 illustrates an example method of preprocessing ToF data by checking the range of the object in accordance with embodiments of the invention;
FIG. 7 illustrates an example method of preprocessing ToF data by checking the position of the object within the field of view in accordance with embodiments of the invention;
FIG. 8 illustrates an example method of preprocessing ToF data by adjusting background zones in accordance with embodiments of the invention;
FIG. 9 illustrates several example postures in accordance with embodiments of the invention;
FIG. 10 illustrates an example AI model in accordance with embodiments of the invention;
FIG. 11 illustrates another example AI model implemented as a convolutional neural network (CNN) model in accordance with embodiments of the invention;
FIG. 12 illustrates still another example AI model that is a specific implementation of a CNN model in accordance with embodiments of the invention;
FIG. 13 illustrates another example shape recognition device that includes a multizone direct ToF sensor coupled to a microcontroller (MCU) in accordance with embodiments of the invention;
FIG. 14 illustrates still another example shape recognition device that includes a multizone ToF sensor coupled to a central processing unit (CPU) in accordance with embodiments of the invention;
FIG. 15 illustrates an example multizone ToF sensor in accordance with embodiments of the invention;
FIG. 16 illustrates an example method of developing a shape recognition model in accordance with embodiments of the invention;
FIG. 17 illustrates an example shape recognition graphical user interface for training a shape recognition model in accordance with embodiments of the invention;
FIG. 18 illustrates example ToF data including 256 zones arranged as a 16 by 16 array in accordance with embodiments of the invention;
FIG. 19 illustrates example ToF data including 16 zones arranged as a 4 by 4 array in accordance with embodiments of the invention;
FIG. 20 illustrates example ToF data including 128 zones arranged as a 16 by 8 array in accordance with embodiments of the invention;
FIG. 21 illustrates example ToF data including 128 zones arranged as two 8 by 8 arrays in accordance with embodiments of the invention;
FIG. 22 illustrates an example method of recognizing a shape in accordance with embodiments of the invention; and
FIG. 23 illustrates another example method of recognizing a shape in accordance with embodiments of the invention.

Corresponding numerals and symbols in the different figures generally refer to corresponding parts unless otherwise indicated. The figures are drawn to clearly illustrate the relevant aspects of the embodiments and are not necessarily drawn to scale. The edges of features drawn in the figures do not necessarily indicate the termination of the extent of the feature.

### DETAILED DESCRIPTION OF ILLUSTRATIVE EMBODIMENTS

The making and using of various embodiments are discussed in detail below. It should be appreciated, however, that the various embodiments described herein are applicable in a wide variety of specific contexts. The specific embodiments discussed are merely illustrative of specific ways to make and use various embodiments, and should not be construed in a limited scope. Unless specified otherwise, the expressions "around", "approximately", and "substantially" signify within 10%, and preferably within 5% of the given value or, such as in the case of substantially zero, less than 10% and preferably less than 5% of a comparable quantity.

Shape recognition (e.g. recognition of hand postures) already exists various conventional implementations. For example, shape recognition can be done with cameras (e.g. a vision-based camera such as any RGB/YCbCr camera with high enough shutter speed like a video camera). There are several drawbacks inherent to using vision-based cameras for shape recognition. As a result, vision-based camera shape recognition solutions have not been successful in current device markets.

Some of the drawbacks of conventional shape recognition systems such as vison-based camera solutions are: (1) high processing power (e.g. due to the large number of pixels and pixel data requiring processing); (2) huge power consumption (e.g. because the camera, a webcam for example, must always being on for shape recognition functionality; (3) high integration complexity (even for basic applications); and (4) lack of user privacy (which is increasingly becoming a major concern for all electronic devices, especially everyday devices that are always on).

Because shape recognition is desirable in some many applications, it is desirable to design a shape recognition system that is able to recognize the shape and/or motion of an object with less complexity and lower power. As a side benefit, less complexity and lower power may also increase user privacy by virtue of some combination of the data not being easily interpreted, not all data being processed, and the data not being accessible by a general processor.

Time-of-flight (ToF) sensors utilize a light source, a photosensor, and precise timing circuitry to measure the time it takes for emitted light to bounce off an object and return. This system can be used to measure the distance of an object from the ToF sensor because the speed of light is approximately constant in air. Multizone ToF sensors and generate two-dimensional depth maps using an array of photosensors and appropriate optics to enable spatial resolution.

While there are some similarities between the depth maps generated by a multizone ToF sensor and images generated by video-based cameras, there are several differences. For example, a depth map may only use one value per zone (also called a pixel, but to aid in comprehension, the term zone will be used for ToF data and the term pixel will be reserved for vision-based imaging). In contrast, an RGB image has three values per pixel. Also, though a multizone ToF sensor uses light to generate a depth map, it is used indirectly (i.e. the time it takes for the light to return is measured rather than the light itself). By comparison, light is measured directly by vision-based cameras to generate an image. Depth maps do not include any color information while an RGB image contains no distance information.

Another difference between vision-based cameras and multizone ToF sensors is that vision-based cameras are often much higher resolution. While this is a benefit for applications such as recording video footage and taking photographs, it becomes a drawback for shape recognition solutions because of power consumption and privacy concerns. However, shape recognition using low resolution vision-based cameras is conventionally thought to be impossible.

In various embodiments, a shape recognition device includes a multizone ToF sensor configured to generate ToF data including signal information corresponding to each zone of its field of view. The signal information indicates the presence of objects located in the field of view. Distance information for objects (or portions of obj ects) located in each zone can be obtained from the signal information. The ToF sensor may calculate the distance information for each zone. The multizone ToF sensor may have reduced resolution compared to vision-based cameras. For example, although higher resolution multizone ToF sensors may be used, there may be 256 or fewer zones in the field of view of the multizone ToF sensor (e.g. an 8 by 8 array totaling only 64 zones).

A processor is coupled to the multizone ToF sensor and is configured to receive the ToF data. The contents of the ToF data may vary depending on the specific implementation. For example, the signal information may include raw signal data, processed signal data, and/or specific metrics computed from the signal data (e.g. distance information such as a distance value corresponding to each zone). In some embodiments, the signal information includes both distance information as well as additional signal information.

The signal information may be organized as a two-dimensional array of zone data containing the signal information associated with each zone. In some cases, the size of the ToF data may be small, such as two or even one value per zone. In other cases, the ToF data may be larger even though the number of zones remains small.

The processor is further configured to recognize an object in the field of view of the multizone ToF sensor as a shape using the received ToF data. For example, the processor may be configured to filter the ToF data through an artificial intelligence (AI) model to create AI output data that can be used to recognize the shape. The shape may be any form of an object, such as the shape of a hand, as an example.

The processor may be a microcontroller (MCU) that includes its own nonvolatile integrated memory, such as flash memory, or may be a general processor such as a central processing unit (CPU). In some implementations, the processor may be an MCU included in the multizone ToF sensor.

The shape recognition device may advantageously overcome some or all of the aforementioned limitations of conventional shape recognition solutions. For example, the processing requirements using the ToF data may be advantageously small, (e.g. 64 ordered pairs as input data) which may result in benefits such as fast shape recognition, low complexity, and low power consumption. Another potential benefit of using ToF data and lower resolution is increased user privacy. For example, with 64 zones, the human eye can distinguish very little detail. Additionally, integration using ToF technology may be simpler than conventional solutions, such as vision-based shape recognition.

It should be mentioned that the relatively low amount of data available using multizone ToF sensors led to a conventional belief that shape recognition using ToF sensors was not feasible. This is similar to the conventional understanding that lower resolution vision-based shape recognition is not feasible, except that the single distance value per zone for multizone ToF sensing is even less data than the three color values per pixel for vision-based sensing. However, various embodiments described herein have the advantage of enabling shape recognition using ToF data by leveraging additional signal data and/or an AI model to accurately recognize shapes.

Because of advantages such as low power, low complexity, simple integration, and increased privacy, the embodiments herein may advantageously be implemented in a wide variety of applications, including: smart devices, vehicles, home appliances (clocks, fixtures such as faucets and showerheads, window treatments, things one would rather not touch such as toilets, etc.), service robots, responding nonverbally in virtual meetings, and others.

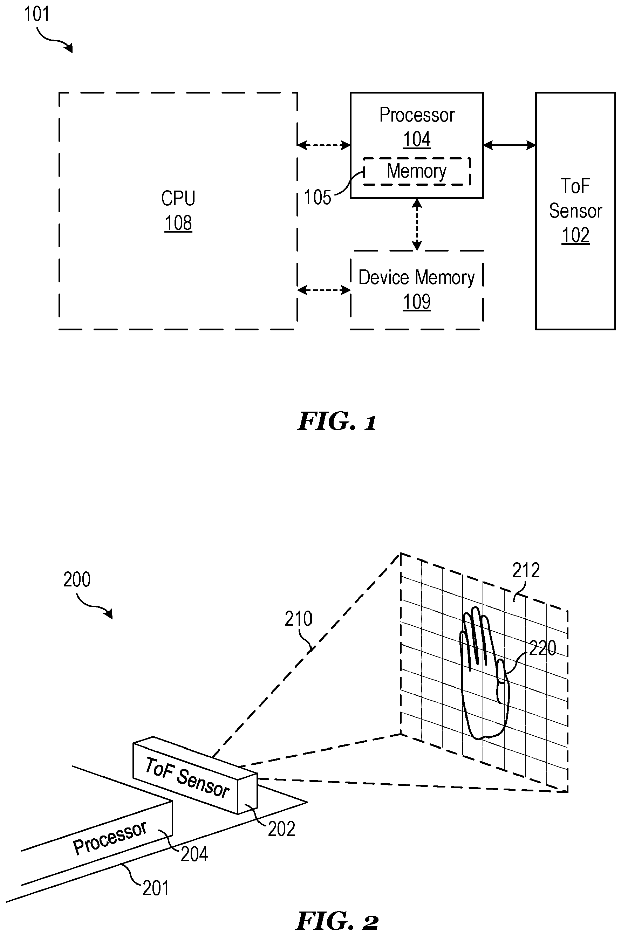

FIG. 1 illustrates an example shape recognition device that includes a multizone ToF sensor coupled to a processor in accordance with embodiments of the invention.

Referring to FIG. 1, a shape recognition device **101** includes a multizone ToF sensor **102** coupled to a processor **104.** The multizone ToF sensor **102** includes a field of view divided into zones. The multizone ToF sensor **102** is configured to measure ToF data for each of the zones in the field of view. For example, each zone detects a signal that includes signal information. Various metrics can be calculated using the signal information, such as distance information for an object in a given zone.

There are two different types of ToF sensing, direct ToF (dToF) sensing and indirect ToF (iToF) sensing. In the case of dToF sensing, a dToF system may emit a light pulse and measure the time that elapses between emission of the signal and the return of a reflected signal off the target object. Then, the elapsed time (the time of flight) can be converted into a distance measurement. In the case of iToF sensing, a modulated signal may be emitted from an iToF system. The returned signal is sensed by the zones of the sensor. The phase of the returned signal reflected off the target object and the phase of the emitted signal may be compared to estimate the phase difference at each zone.

In one embodiment, the multizone ToF sensor **102** is a multizone dToF sensor. Various advantages may be afforded by using a dToF sensor, such as the ability to determine distance in a single scan. However, the multizone ToF sensor **102** may also be a multizone iToF sensor in some embodiments.

The processor **104** may be a general processor or may be specifically configured to perform the specific functions of the shape recognition device **101.** In one embodiment, the processor **104** is a microcontroller (MCU). In another embodiment, the processor **104** is a central processing unit (CPU). However, many other processors may also be suitable, such as an application-specific integrated circuit (ASIC) or a field programmable gate array (FPGA).

The processor **104** may have a processor memory **105** integrated within the processor **104** (e.g. when the processor **104** is an MCU). The processor memory **105** may store instructions that, when executed, cause the processor **104** to perform methods associated with shape recognition, such as the various methods shown and described herein. For example, the processor memory **105** may be read-only memory (ROM) that is usable for storing programs to be executed. In one embodiment, the processor memory **105** is flash memory.

Additionally or alternatively, some or all of the shape recognition instructions may be stored in a device memory **109** that is optionally coupled to the processor **104.** As a further alternative, the processor **104** may be included as an MCU in the multizone ToF sensor **102** itself. This could be made possible, for example, by the reduced complexity afforded by using ToF data with reduced resolution.

In some applications, such as when shape recognition is integrated into a device that already has considerable processing capabilities, the processor **104** may not be the primary processor in the shape recognition device **101.** When this is the case, a CPU **108** may optionally be included and coupled to the processor **104.** The processor **104** may be configured to perform shape recognition functions while the CPU **108** may be configured to use the recognized shapes (e.g. for device control) and to perform other tasks unrelated to shape recognition.

The CPU **108** may also use the device memory **109** (as shown), as the CPU **108** is configured to load execute programs that have been loaded into random access memory (RAM) from an external memory for execution. In contrast to the optional CPU **108,** which may not have onboard RAM or ROM, the processor **104** may have both when implemented as an MCU, allowing the shape recognition device **101** to function without a CPU, if desired.

The shape recognition device **101** may be any device that can be controlled using shapes. For example, the shape recognition device **101** may be a smart device, such as a smart phone, a wearable device, a household appliance, vehicle, computer, entertainment equipment such as an audio receiver, projector or television, service robot, toy, and others. In one embodiment, the shape recognition device **101** is a watch. In another embodiment, the shape recognition device **101** is an earbud. The reduced complexity of the shape recognition device **101** may allow shape recognition in a digital watch, not just a smart watch.

FIG. 2 illustrates an example shape recognition system that includes a multizone ToF sensor configured to recognize an object as a shape within the field of view of the multizone ToF sensor in accordance with embodiments of the invention. The shape recognition system of FIG. 2 may include a shape recognition device as described herein, such as the shape recognition device of FIG. 1, for example. Similarly labeled elements may be as previously described.

Referring to FIG. 2, a shape recognition system **200** includes a shape recognition device **201** that has a multizone ToF sensor **202** coupled to a processor **204.** It should be noted that here and in the following a convention has been adopted for brevity and clarity wherein elements adhering to the pattern [x01] where 'x' is the figure number may be related implementations of a shape recognition device in various embodiments. For example, the shape recognition device **201** may be similar to the shape recognition device **101** except as otherwise stated. An analogous convention has also been adopted for other elements as made clear by the use of similar terms in conjunction with the aforementioned numbering system.

The multizone ToF sensor 202 has a field of view **210** that is divided into zones **212.** An object **220** in the field of view **210** is detected by the multizone ToF sensor **202** when emitted light bounces off the object **220** and is detected by a photosensor corresponding to a particular zone. As shown, the object **220** may not take up the entire field of view **210** so the signal information received by the zones **212** will be different and a shape (e.g. a hand posture as illustrated) can be recognized.

The multizone ToF sensor **202** may have reduced resolution compared with conventional vision-based camera shape recognition systems. In various embodiments, the field of view field of view **210** of the multizone ToF sensor **202** includes at most 256 zones **212.** In one embodiment, the field of view **210** is a 16 by 16 array of zones **212.** In another embodiment, the field of view 210 has an 8 by 8 array of zones. The resolution of the multizone ToF sensor **202** may be too low for an image to be formed that is recognizable as the object with only the human eye. While this may be perceived as a limitation in other contexts, it may be considered an advantage here due to the much lower complexity and power requirements. That is, the ability to recognize shapes even with the limitations of reduced resolution allows the invention to overcome some or all of the drawbacks of conventional vision-based camera shape recognition systems discussed above.

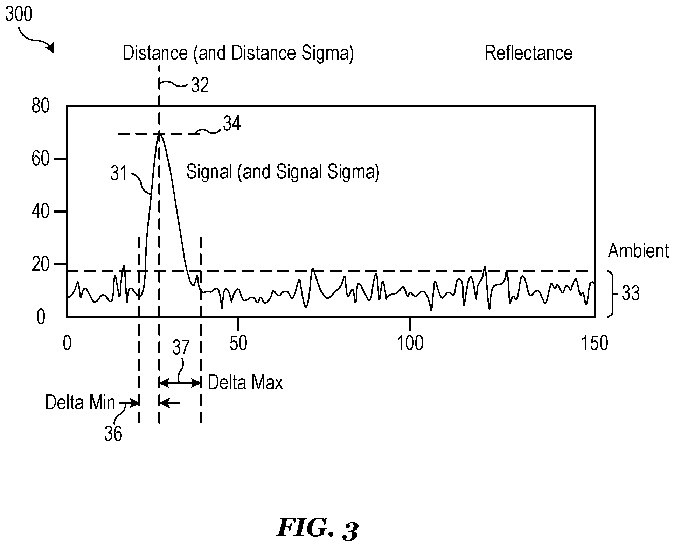

FIG. 3 illustrates an example ToF signal in accordance with embodiments of the invention. The ToF signal of FIG. 3 may be a specific example of any of the ToF signals described herein, such as in conjunction with multizone ToF sensors like the multizone ToF sensor **102** of FIG. 1, for example. Similarly labeled elements are as previously described.

Referring to FIG. 3, a ToF signal **300** includes a signal curve **31** indicating the time-dependent quantity of photons detected at a given photosensor of a multizone ToF sensor. Various features may be discernable from the signal curve **31** such as a signal peak **34** and distance information **32** (and associated signal sigma and distance sigma). The width of the signal peak **34** may be described by a delta min **36** and a delta max **37.** Other metrics can also be obtained from the signal curve **31** such as the level of background noise (ambient **33)** and the reflectance of the obj ect.

If should be noted that although ToF sensors are associated with the ability to provide a distance value from distance information **32** for objects based on the signal curve **31,** many more pieces of information are also available from the signal curve **31.** Eight features are shown here, but of course more are possible. Various embodiments, of the shape recognition methods described herein have the advantage of using additional signal information (i.e. other than the distance information **32)** to improve the capability of the shape recognition devices and systems to recognize shapes using multizone ToF sensors.

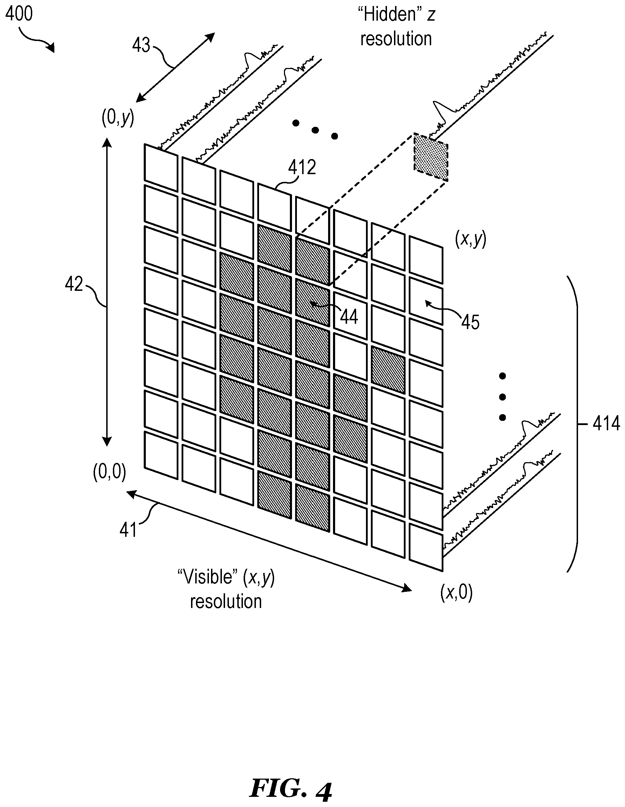

FIG. 4 illustrates example ToF data in accordance with embodiments of the invention. The ToF data of FIG. 4 may be a specific example of any ToF data described herein, such as in conjunction with multizone ToF sensors like the multizone ToF sensor **102** of FIG. 1, for example. Similarly labeled elements are as previously described.

Referring to FIG. 4, ToF data **400** includes a ToF frame **414** divided into zones **412.** In this specific example, the ToF frame **414** is divided into 64 zones **412** (shown as an 8 by 8 two-dimensional array). The ToF frame 414 has a first dimension **41** (*x*) and a second dimension **42** (y) representing the spatial resolution of the ToF frame **414** within the field of view of a multizone ToF sensor.

For illustrative purposes, some of the zones **412** are shown as detecting an object at a close distance **44** while some of the zones **412** are shown as detecting an object at a far distance **45.** The obj ect being detected may be from a user seeking to make a posture for a shape recognition device (e.g. a flat hand posture). The close distance **44** zones and far distance **45** zones represent the entirety of the information used for creating a depth map of the ToF frame **414** (e.g. the "visible" resolution for multizone ToF sensors).

However, as previously mentioned, there is additional information in each signal of each zone that can be conceptualized as a "hidden" z dimension **43.** Some or all of this data may be included in the ToF data **400** that is used to recognize a shape by a shape recognition device. In various embodiments, additional signal information corresponding to the quantity of photons detected (e.g. the signal peak, area under the peak, total detected photons in a time window, etc.) are in included along with the distance information in the ToF data received by a processor configured to shape recognition.

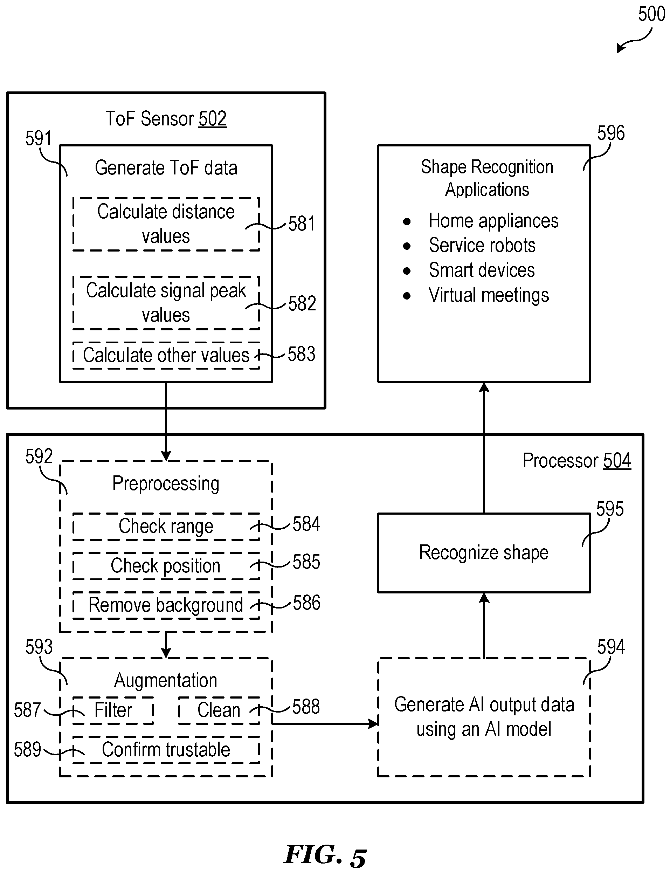

FIG. 5 illustrates an example method of recognizing a shape using a multizone ToF sensor in accordance with embodiments of the invention. The method of FIG. 5 may be combined with other methods and performed using the systems and devices as described herein. For example, the method of FIG. 5 may be combined with any of the embodiments of FIGS. 1-4 and 6-23. Although shown in a logical order, the arrangement and numbering of the steps of FIG. 5 are not intended to be limited. The method steps of FIG. 5 may be performed in any suitable order or concurrently with one another as may be apparent to a person of skill in the art.

Referring to FIG. 5, a method **500** includes a step **591** of generating ToF data. This is done by a multizone ToF sensor **502** by emitting light and detecting photons in each of the zones to acquire signal information. The raw signal information may optionally be modified in various ways to produce the ToF data that will be received by a processor **504.** For example, the multizone ToF sensor **502** may calculate distance values in an optional step **581,** calculate signal peak values in an optional step **582,** and/or calculate other values in an optional step **583.**

In various embodiments, the ToF data includes distance information (e.g. distance values) and at least one type of additional signal information. In one embodiment, the ToF data includes distance values and signal peak values. In another embodiment, the ToF data includes distance values and the area under the signal peak. For example, the ToF data may be arranged as a two-dimensional array (e.g. 8 by 8) of order pairs including distance information and additional signal information. However, more information may be included and, in some applications, shape recognition may be possible with only distance information (such as for higher resolution depth maps).

Once the processor **504** receives the ToF data, the processor **504** may perform one or more preprocessing tasks in an optional step **592** to ensure that the ToF data contains an object that may be recognized as a shape and prepare the ToF data for shape recognition. Some example preprocessing tasks include checking the range of the object in an optional step **584,** checking the position of the object in an optional step **585,** and removing or altering background zones (i.e. zones that are not part of the object of interest) in an optional step **586.**

The ToF data may also be augmented in various ways before shape recognition in an optional step **593.** For example, various filters may be applied to the ToF data in an optional step **587,** the ToF data may be cleaned in an optional step **588,** and in some cases, the ToF data may be confirmed to be trustable data in an optional step **589.** Of course, other data augmentation steps may also be performed.

Once the ToF data is ready, an optional step **594** is to use an AI model to generate AI output data. For example, the AI model may be used to classify the ToF data. Percentages associated with the likelihood that the object is one of the shapes may be part of the AI output data. The processor **504** attempts to recognize the object as a shape in step **595.** For example, the step **595** may include a decision tree or other framework for interpreting the AI output data. Alternatively, the AI output data may simply be a recognized shape. Once a shape is recognized, a function may be performed based on the shape in step **595.**

As already mentioned the processor **504** performs all of the shape recognition processing and may be an MCU in one embodiment. The STM32 family of microcontrollers made by STMicroelectronics are an example of an MCU that may be used to perform the shape recognition methods described herein.

There are two features that each help facilitate reduced resolution shape recognition. (1) Using SIGNAL data. Rather than using only distance information, the binary nature conventionally associated with ToF sensors may be replaced with a range of values that can provide additional signal information. For example, the strength of the signal is in a range and can be used as a source of additional information about each of the zones (e.g. 64 zones). In particular, the signal strength provides information about the amount of the zone that is actually obscured. In many applications (such as lower resolutions) only distance data may not be enough to provide accurate shape recognition. In some cases, more data may be supplied, but there is a tradeoff as more data may be unnecessary and increases power consumption and complexity. (2) AI may make it possible to determine the shape (e.g. hand posture) even though no image can be discerned.

While only one of these features may be required in certain applications, they both advantageously improved the performance of the shape recognition devices using multizone ToF sensors and in some cases may make shape recognition possible where it would not be otherwise.

Although the shape recognition described thus far has been focused on recognizing a shape at a single point in time using a single frame of the ToF data, the same concepts could be used to detect a specific motion (e.g. a gesture) in combination with a shape such as a hand posture. This could be accomplished by keeping track of what has been detected in a history together with timestamps (although this could also be done by another processor in applications where some sort of motion recognition is useful). Other options are to increase the window of data collection or process multiple frames.

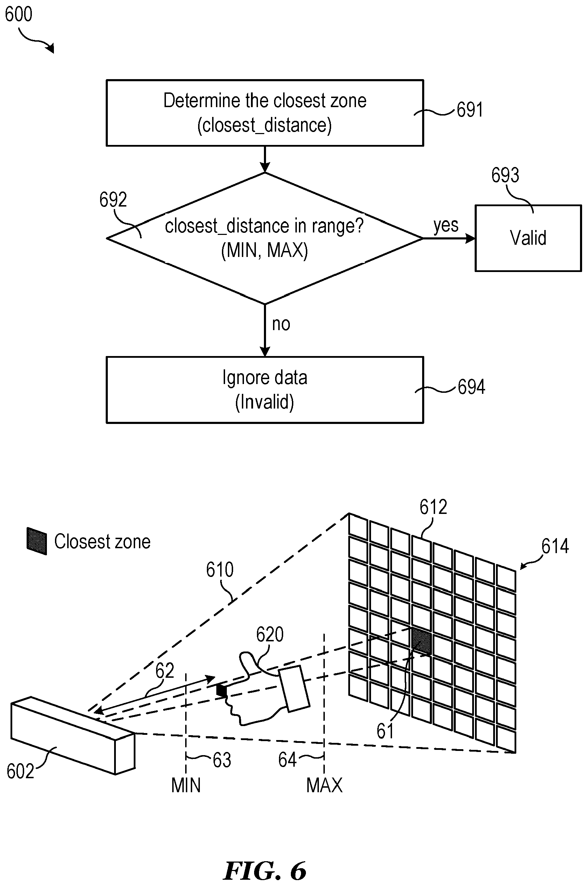

FIG. 6 illustrates an example method of preprocessing ToF data by checking the range of the object in accordance with embodiments of the invention. The method of FIG. 6 may be a specific implementation of other method steps described herein, such as the optional step **584** of FIG. 5, for example. The method of FIG. 6 may be combined with other methods and performed using the systems and devices as described herein. For example, the method of FIG. 6 may be combined with any of the embodiments of FIGS. 1-5 and 7-23. Although shown in a logical order, the arrangement and numbering of the steps of FIG. 6 are not intended to be limited. The method steps of FIG. 6 may be performed in any suitable order or concurrently with one another as may be apparent to a person of skill in the art.

Referring to FIG. 6, a method **600** of preprocessing ToF data by checking the range of an object includes a step **691** of determining a closest zone **61** (the distance value of which may be represented by a label closest_distance 62, as shown in the accompanying illustration of a shape recognition system). For example, a multizone ToF sensor **602** that has a field of view **610** divided into zones **612** may measure a ToF frame **614** and determine that the closest zone **61** of an object **620** is at a certain distance (closest_distance 62) from the multizone ToF sensor **602.** For example, the closest zone may be determined by a processor using distance information of zone data in ToF data received from the multizone ToF sensor **602,** (e.g. iterating over the ToF data and finding the lowest distance value).

Step **692** is to check whether the closest zone **61** is within a predetermined distance range (an acceptable range for continuing the shape recognition process). The distance range includes two predetermined values (a minimum valid distance **63** and a maximum valid distance **64).** If the closest_distance 62 is within the range, then the processor determines that the frame is valid in step **693.** However, if the closest zone **61** is not within the predetermined distance range, then the processor may ignore (that is, consider the whole frame invalid and, remove, skip, or otherwise decline to process) the ToF frame **614** in step **694.**

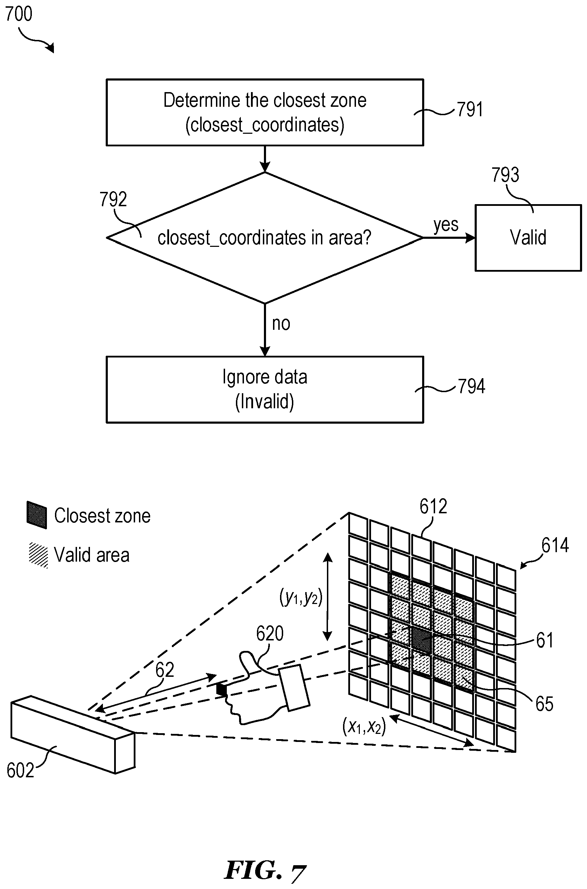

FIG. 7 illustrates an example method of preprocessing ToF data by checking the position of the object within the field of view in accordance with embodiments of the invention. The method of FIG. 7 may be a specific implementation of other method steps described herein, such as the optional step **585** of FIG. 5, for example. The method of FIG. 7 may be combined with other methods and performed using the systems and devices as described herein. For example, the method of FIG. 7 may be combined with any of the embodiments of FIGS. 1-6 and 8-23. Although shown in a logical order, the arrangement and numbering of the steps of FIG. 7 are not intended to be limited. The method steps of FIG. 7 may be performed in any suitable order or concurrently with one another as may be apparent to a person of skill in the art.

Referring to FIG. 7, a method **700** of preprocessing ToF data by checking the position of the object within the field of view includes a step **791** of determining the closest zone **61,** may be similar to step **691.** It may be desirable to check the position of the object in order to make sure it is sufficiently centered for a shape to potentially be recognized.

Step **792** is to check whether the closest zone **61** is within a valid area (an acceptable area of the ToF frame **614** for continuing the shape recognition process). The valid area has a predetermined range for both dimensions of the two-dimensional array, shown as (*x*₁, *x*₂) and (*y*₁, *y*₂). A processor that received ToF data from the multizone ToF sensor **602** may use the coordinates of the closest zone **61** (closest coordinates) to check whether the closest zone **61** is outside the valid area. If the closest zone **61** is within the valid area, then the processor determines that the frame is valid in step **793.** However, if the closest zone **61** is not within the valid area, then the processor may ignore the ToF frame **614** in step **794.**

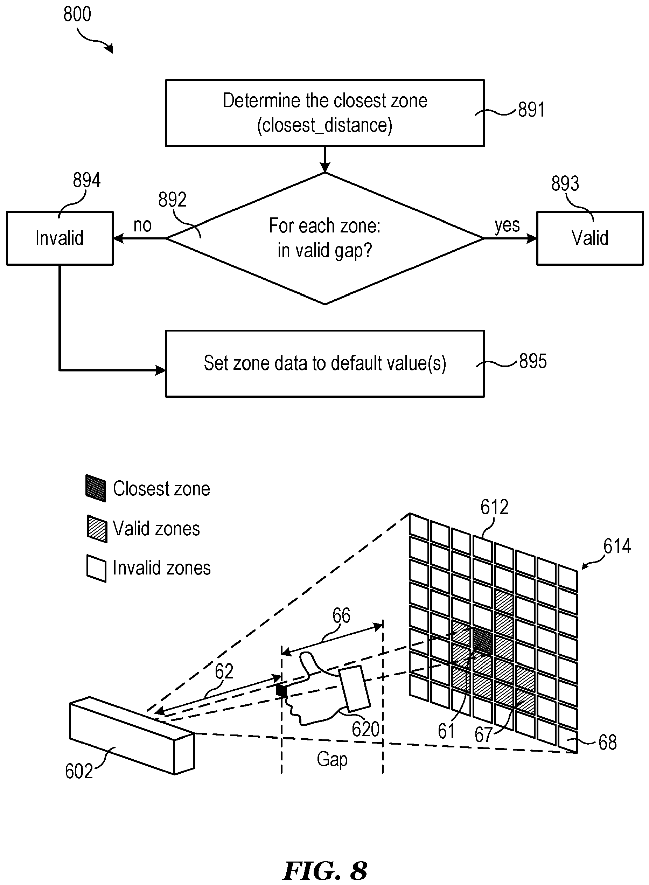

FIG. 8 illustrates an example method of preprocessing ToF data by adjusting background zones in accordance with embodiments of the invention. The method of FIG. 8 may be a specific implementation of other method steps described herein, such as the optional step **586** of FIG. 5, for example. The method of FIG. 8 may be combined with other methods and performed using the systems and devices as described herein. For example, the method of FIG. 8 may be combined with any of the embodiments of FIGS. 1-7 and 9-23. Although shown in a logical order, the arrangement and numbering of the steps of FIG. 8 are not intended to be limited. The method steps of FIG. 8 may be performed in any suitable order or concurrently with one another as may be apparent to a person of skill in the art.

Referring to FIG. 8, a method **800** of preprocessing ToF data by adjusting background zones includes a step **891** of determining the closest zone **61,** may be similar to step **691.** Step **892** is to check whether the closest zone **61** is within a predetermined gap distance (gap_distance 66). The predetermined gap distance differs from the predetermined distance range that was previously discussed in that it is measured from the location of the closest zone **61.** In other words, the processor is checking whether each of the zones **612** that are not the closest zone **61** are within the range (closest_distance, closest_distance + gap_distance).

For each of the zones **612,** if the zone is within the predetermined gap distance, then the processor determines that the zone is valid in step **893.** However, for each of the zones **612** that is not within the predetermined gap distance, the processor invalidates the zone in step **894.** In step **895,** the processor sets the zone data corresponding to the invalid zones to a default values (e.g. indicating that the zones are in the background and not part of the object that may be later recognized as a shape). For example, in the specific case where the zone data includes a distance value (as distance information) and a value associated with the quantity of photons detected in the zone (additional signal information), the default values may be a large distance (e.g. 4,000 mm) and a zero signal, respectively.

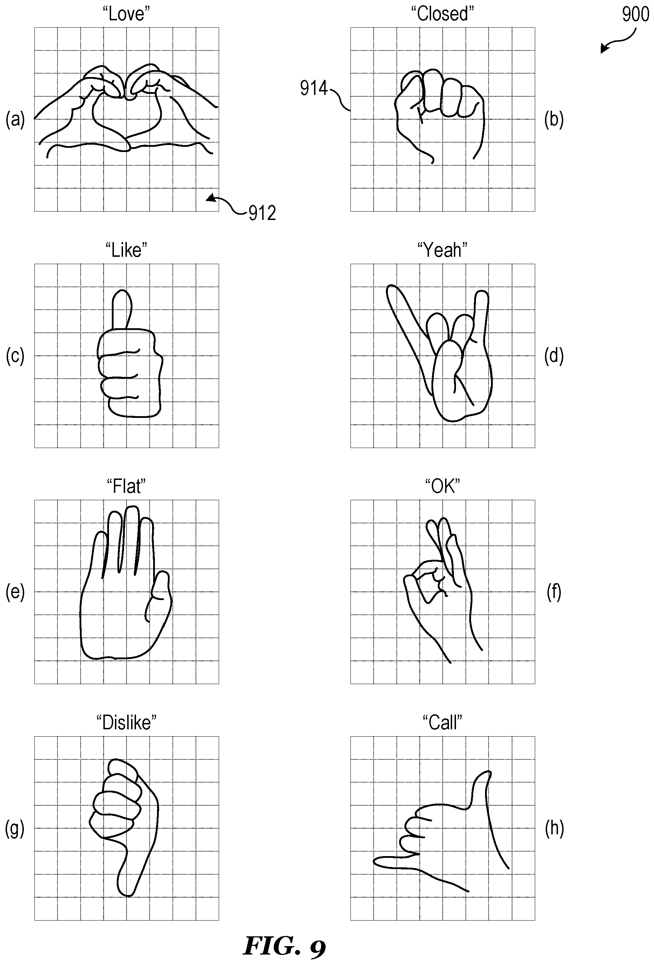

FIG. 9 illustrates several example postures in accordance with embodiments of the invention. Any references to shapes in the embodiments described herein may refer to an example posture of FIG. 9. However, the example postures represented in FIG. 9 are not considered exhaustive. On the contrary, a recognizable shape may take an infinite number of forms depending on the application and on user and developer imagination. Recognizable shapes may also be displayed using other objects than hands, including inanimate objects (such as for creative interaction with electronic toys, as one example).

Referring to FIG. 9, eight example postures **900** are shown overlaid on a ToF frame **914** divided into zones **912** (numbering **64** merely as a convenient example). As shown here, in the specific context of postures displayed using a hand, the postures are stationary hand shapes that are held in front of the ToF sensor at a distance in which the hand fills a portion of the field of view. The eight examples, (again, non-exhaustive) are: (a) "Love", a heart-shaped hand signal formed with joined fingers for the top of the heart and joined thumbs for the bottom of the heart; (b) "Closed", a (forward-facing) closed fist, (whether or not the shape recognition system could distinguish orientation may depend on the specifics of the implementation); (c) "Like", thumb-up hand posture, could be forward-facing as shown or side-facing, may be considered the same posture or different postures; (d) "Yeah", pointer/index finger and pinky finger up, all others closed; (e) "Flat", a flat hand posture where all fingers are straight; (f) "OK", pointer/index finger and thumb forming an 'o' shape and remaining fingers straight; (g) "Dislike", thumb-down hand posture; and (h) "Call", thumb-up with pinky extended and hand sideways to allow pinky to be distinguished.

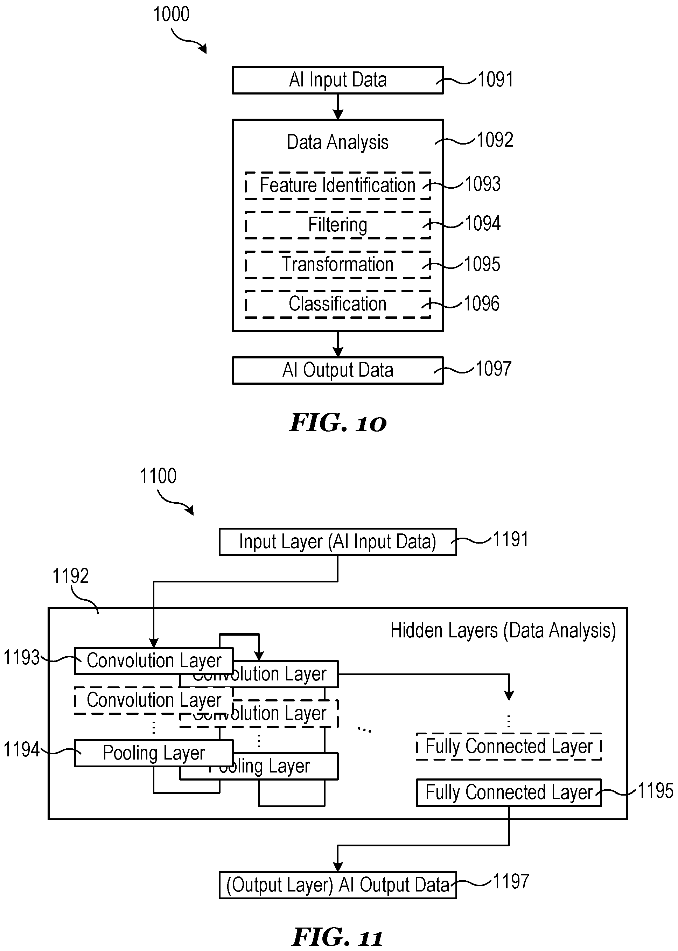

FIG. 10 illustrates an example AI model in accordance with embodiments of the invention. Any references to an AI model in embodiments described herein may refer to the example AI model of FIG. 10. Similar labels are as previously described.

Referring to FIG. 10, an AI model **1000** includes inputting AI input data **1091** into a data analysis model **1092.** The data analysis model **1092** may include various analysis steps that can be used to augment, classify, and/or recognize a shape from the AI input data **1091** (e.g. ToF data). For example, the data analysis model **1092** may include one or more feature identification steps **1093,** filtering steps **1094,** data transformation steps **1095,** and classification steps **1096.** The details of the data analysis model **1092** such as which steps to include and the implementations of each step will vary from model to model. The end result of inputting the AI input data **1091** into the data analysis model **1092** is an AI output data **1097,** which may be used to recognize an object as a shape. Alternatively, the AI output data **1097** may itself be a specific shape indicating that the object is the shape. In this case the shape recognition step is including in the AI model **1000** instead of being a separate step (such putting the AI output data **1097** into a decision tree).

AI (artificial intelligence) techniques may be advantageously used to recognize shapes using reduced data sets. For example, a processor of a shape recognition device may receive ToF data from a multizone ToF sensor and filter the ToF data through an AI model to create AI output data that may then be used to recognize an object as a shape.

Many AI model topologies may be suitable for shape recognition, the specific topology may be chosen based on a variety of factors such as desired application, number and type of shapes, and available hardware. An example of a class of AI models that may be used are machine learning algorithms. In some embodiments, the AI model **1000** is a neural network (NN) and is a convolutional neural network (CNN) in one embodiment. Other AI models may also be used such as instance-based algorithms (e.g. a support vector machine (SVM), learning vector quantization (LVQ), etc.), decision tree models, a Bayesian algorithm (naive Bayes, Bayesian network (BN), etc.), an artificial neural network (ANN), deep learning models (CNN, recurrent neural network (RNN), deep belief network (DBN), etc.), and dimensionality reduction algorithms. Of course, more than one AI model can also be combined.

FIG. 11 illustrates another example AI model implemented as a convolutional neural network (CNN) model in accordance with embodiments of the invention. The AI model of FIG. 11 may be a specific implementation of other AI models described herein, such as the AI model of FIG. 10, for example. Similarly labeled elements are as previously described.

Referring to FIG. 11, a CNN model **1100** includes an input layer **1191** in which AI input data is input into a data analysis mode including several hidden layers **1192.** A CNN model may be used for various reasons. For example, CNN models are shift invariant which may be advantageous for shape recognition. The exact number, arrangement, and type of the hidden layers **1192** depends on the specific details of a given application. The hidden layers **1192** include one or more convolution layers **1193,** pooling layers **1194,** and fully connected layers **1195.**

In a convolution layer, the input data is transformed by convolving the input data with one or more filters (known as a kernel) to generate an output of the convolution layer. The process may be iterated over the data set with a window (known as a receptive field), the size of which may be chosen as desired. The displacement length of the receptive field is known as the stride and may also be chosen as desired. The output of a convolution layer may be dimensionally different (e.g. larger or smaller) than the input.

In pooling layers, the input data is processed specifically to reduce the dimensionality (e.g. using averaging, maximum and minimum functions, etc.). Local pooling uses a receptive field iterated over the input while global pooling applies a function to an entire feature map. In fully connected layers, all nodes (known as neurons) are related to one another using weighted connections, allowing in input to progress through and be classified in an output. The output may be a smaller fully connected layer or a single classification.

As illustrated, the structure of the hidden layers **1192** of the CNN model **1100** may be to have one or more blocks, each including one or more convolution layers **1193** followed by one or more pooling layers **1194.** After the input has been filtered through the blocks of convolution layers and pooling layers, one or more fully connected layers **1195** may generate a final output of AI output data at an output layer **1197.**

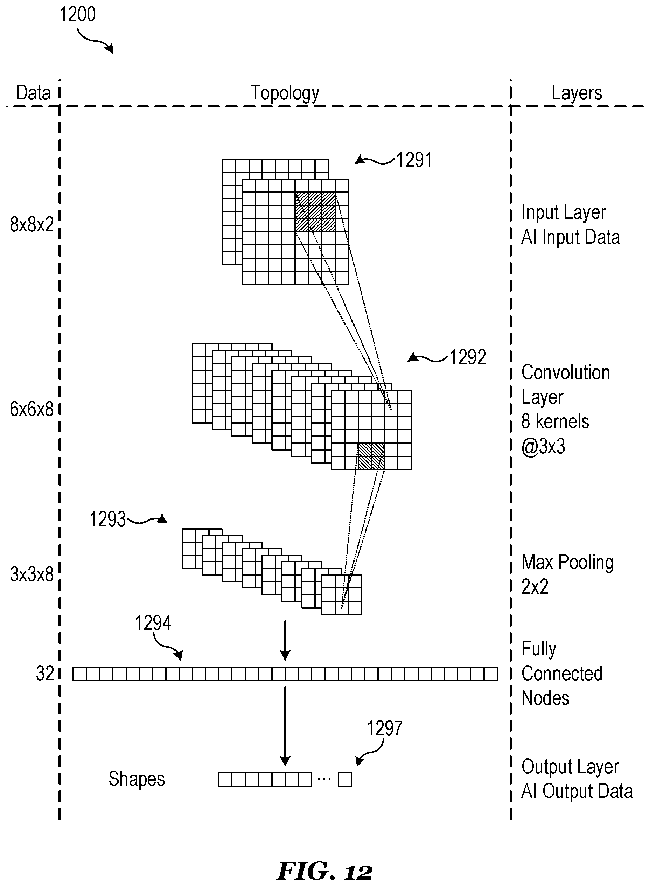

FIG. 12 illustrates still another example AI model that is a specific implementation of a CNN model in accordance with embodiments of the invention. The AI model of FIG. 11 may be a specific implementation of other AI models described herein, such as the AI model of FIG. 11, for example. Similarly labeled elements are as previously described.

Referring to FIG. 12, a CNN model **1200** includes an input layer **1291.** In this specific example, the AI input data is a two-dimensional **8** by 8 array of ordered pairs (or 8x8x2 = 128 values). For example, the input data may correspond to an 8 by 8 frame of a multizone ToF sensor and each order pair may correspond to a zone and include a distance value and a signal value.

The CNN model **1200** also includes a convolution layer **1292.** The convolution layer 1292 has eight kernels (e.g. filters) which may correspond with the number of shapes. However, there may be more or fewer kernels than the number of shapes. Each kernel generates a 6 by 6 array by iterating a 3 by 3 receptive field over the input data with a stride of one. The resulting output of the convolution layer **1292** in this specific example is then 6x6x8 = 288 values.

A pooling layer **1293** is included after the convolution layer **1292.** The pooling layer **1293** is a local pooling layer and scans a 2 by 2 receptive field over the output of the convolution layer **1292** with stride 2. In this case, the pooling layer **1293** is a max pooling layer (it takes the maximum value of each receptive field). The output of the pooling layer **1293** is 3x3x8 = 72 values. That is, the output dimensionality is smaller than the input dimensionality.

The CNN model **1200** further includes a fully connected layer **1294** consisting of 32 fully connected nodes. The fully connected layer **1294** outputs AI output data at an output layer **1297.** For example, as shown, the output may be each of the possible shapes with an associated weight (e.g. percentage chance that the AI input data corresponds with a particular shape). A shape recognition device may then use the AI output data to recognize an object as a shape in the field of view of a multizone ToF sensor (e.g. using a decision tree).

It should be noted that there may be some advantages to using this specific example of a CNN model. For example, the CNN model 1200 has only one convolutional layer, only one pooling layer, and only one fully connected layer. Reducing the number of layers may advantageously reduce complexity and enable shape recognition to be performed entirely on self-contained, efficient processor such as an MCU. In some cases, the application may use more than one of any of the three layers (such as when there are more shapes, fewer zones, etc.). That is, the number of layers of one type may be increased independent of the other layers.

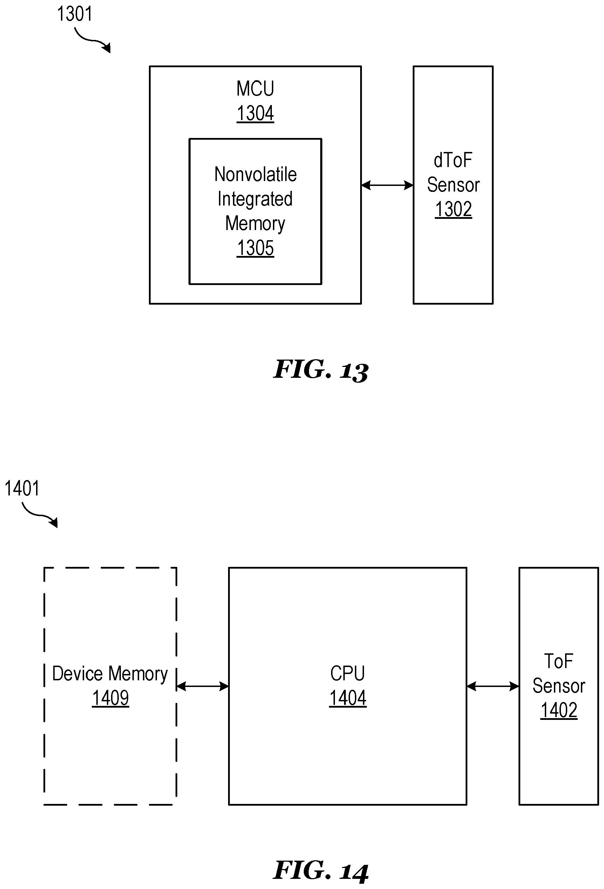

FIG. 13 illustrates another example shape recognition device that includes a multizone direct ToF sensor coupled to a microcontroller (MCU) in accordance with embodiments of the invention. The shape recognition device may be a specific implementation of other shape recognition devices described herein, such as the shape recognition device of FIG. 1, for example. Similarly labeled elements are as previously described.

Referring to FIG. 13, a shape recognition device **1301** includes a multizone dToF sensor **1302** coupled to an MCU **1304.** The MCU **1304** includes a nonvolatile integrated memory **1305.** The nonvolatile integrated memory **1305** may store instructions that, when executed by the processor, perform a method of shape recognition. The nonvolatile integrated memory **1305** may be any type of nonvolatile memory. In one embodiment, the nonvolatile integrated memory **1305** is flash memory (e.g. onboard flash memory).

The shape recognition device **1301** may advantageously recognize shapes using only the MCU **1304** (e.g. without the need for another processor, such as a larger, less efficient CPU). For example, when an AI model is used, the MCU **1304** may be configured to filter ToF data and identify an object as a shape by executing instructions stored entirely in the nonvolatile integrated memory **1305.**

In some cases, the multizone dToF sensor **1302** may even include the MCU **1304** and be configured to perform shape recognition. For example, ToF sensors often include an MCU configured to process the received signal information before sending to an external device. The MCU included in the multizone dToF sensor **1302** may be configured as the MCU **1304** making the footprint of the shape recognition device **1301** even smaller and potentially creating benefits to efficiency and application integration simplicity.

FIG. 14 illustrates still another example shape recognition device that includes a multizone ToF sensor coupled to a central processing unit (CPU) in accordance with embodiments of the invention. The shape recognition device may be a specific implementation of other shape recognition devices described herein, such as the shape recognition device of FIG. 1, for example. Similarly labeled elements are as previously described.

Referring to FIG. 14, a shape recognition device **1401** includes a multizone ToF sensor **1402** coupled to a CPU **1404** which is in turn coupled to a device memory **1409.** In this configuration, the instructions to perform shape recognition are stored in the device memory **1409** and executed by the CPU **1404.** The CPU **1404** may be the main processor of a device that performs other functions related to the functionality of the device other than shape recognition.

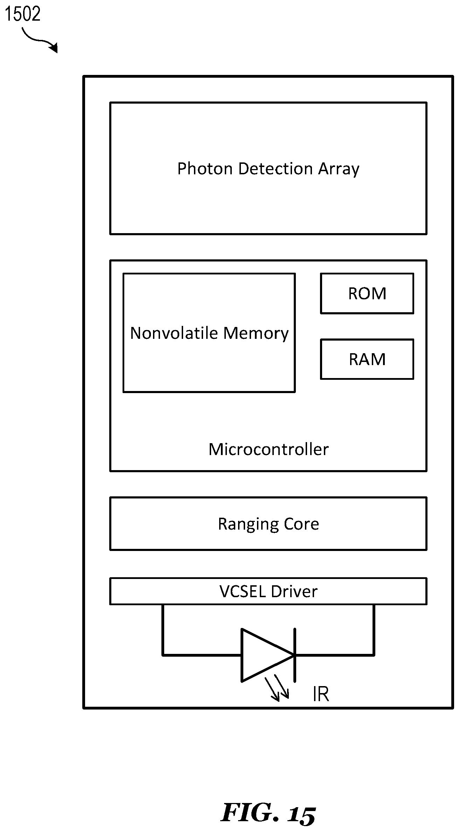

FIG. 15 illustrates an example multizone ToF sensor in accordance with embodiments of the invention. Any references to a multizone ToF sensor in the embodiments described herein may refer to the specific implementation of a multizone ToF sensor of FIG. 15. Similarly labeled elements may be as previously described.

Referring to FIG. 15, a multizone ToF sensor **1502** may include a variety of internal components, one specific implementation example being shown here. For example, the multizone ToF sensor **1502** includes a light source (here shown as a vertical cavity surface-emitting laser (VCSEL)) controlled by a VCSEL driver. The multizone ToF sensor **1502** also includes a photosensor, here illustrated as a photon detection array. For example, the photon detection array may be an array of single photon avalanche diodes (SPADs).

The signals detected by the photon detection array may be processed using a microcontroller (MCU). The MCU may include nonvolatile memory, ROM, and RAM. Additionally or alternatively, the nonvolatile memory, ROM, and RAM may be external to the microcontroller. A ranging core may also be included to provide various functionality related to determining the range of objects within the field of view of the photon detection array.

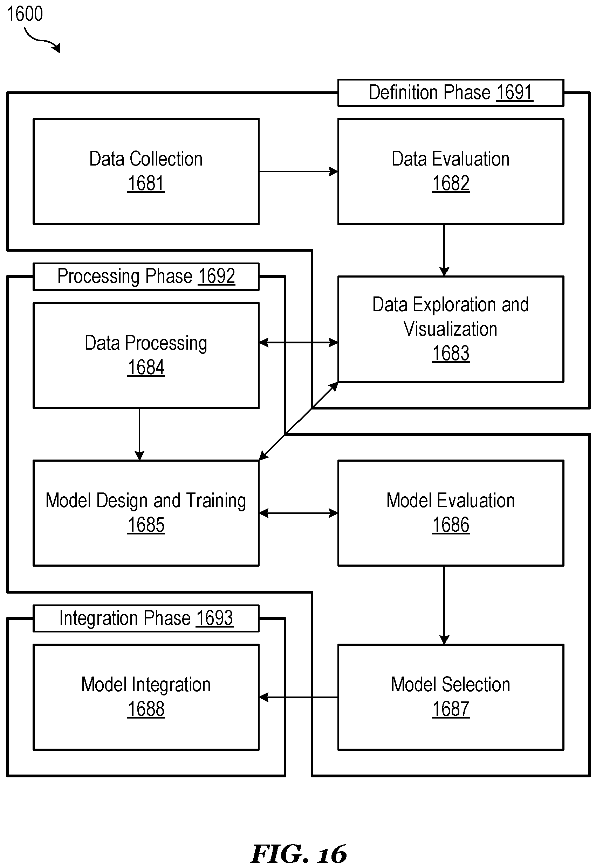

FIG. 16 illustrates an example method of developing a shape recognition model in accordance with embodiments of the invention. The method of FIG. 16 may be combined with other methods and performed using the systems and devices as described herein. For example, the method of FIG. 16 may be combined with any of the embodiments of FIGS. 1-15 and 17-23. Although shown in a logical order, the arrangement and numbering of the steps of FIG. 16 are not intended to be limited. The method steps of FIG. 16 may be performed in any suitable order or concurrently with one another as may be apparent to a person of skill in the art.

Referring to FIG. 16, a method **1600** is divided into three main phases: A definition phase **1691** that may include data logging and labelling, a developer or user making hand shapes so that the library of hand shapes can be defined and refined to fit a particular shape application and hardware capability; a processing phase **1692** that may include preprocessing, training, inputting training shapes and optimizing pre-processing so that the library of shapes can be recognized by an AI model; and an integration phase **1693** that may incorporate the shape library framework, preprocessing, and chosen AI model into the chosen environment to achieve the desired application-specific capabilities, may include hardware drivers, converting design languages into executable languages, etc.

The definition phase **1691** may include data collection **1681,** data extraction **1682,** and data exploration and visualization **1683.** The definition phase **1691** may proceed linearly. In some case, however, it returning to a previous step of the phase may be necessary or desirable. The processing phase **1692** may include data processing **1684,** model design and training **1685,** model evaluation **1686,** and model selection **1687.** Model integration **1688** may be performed in the integration phase **1693.**

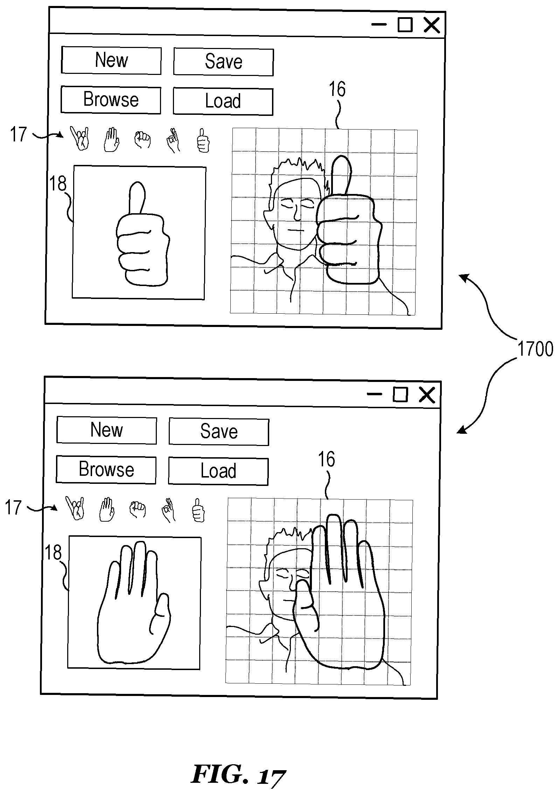

FIG. 17 illustrates an example shape recognition graphical user interface (GUI) for training a shape recognition model in accordance with embodiments of the invention. The GUI of FIG. 17 may provide an interface by which a user or developer may train or modify a shape recognition model to improve the shape recognition capabilities of a shape recognition device or shape recognition system.

Referring to FIG. 17, a shape recognition GUI **1700** includes a visualization (e.g. a "window" displayed on a screen or other display) that includes a video image **16** and a recognized posture field **18.** A user or developer may use a multizone ToF sensor to measure new ToF data of the user displaying a new posture (for simplicity the term user will be used henceforth, with the understanding that a "user" in this context may be a developer or an end user). The new ToF data may be labeled as the new posture and used to train the AI model. Of course, the shape recognition GUI **1700** may also be used for general shapes and not just user postures.

A video camera may show an image recognizable with the human eye of the user displaying the posture in real time along with an overlay of the field of view of the multizone ToF sensor. The shape recognition GUI **1700** may also display a graphical representation of the ToF data displayed in real time to aid in understanding how the displayed posture relates to the ToF data.

The recognized posture field **18** may provide real-time feedback of what the shape recognition device has determined from the displayed posture. For example, if the shape is recognized, then the recognized posture field **18** may display the posture. If the shape recognition device does not recognize the shape, any number of other glyphs or messages may be displayed in the recognized posture field **18** to indicate how the shape recognition device is interpreting the user's posture.

Various other functionality related to training a shape recognition model may also be included in the shape recognition GUI **1700.** For example, a shape bank **17** may be shown to allow the user to see what shapes are possible and test the ability of the shape recognition device to recognize each one. The shape bank **17** may be updated as the user defines new shapes, by using the "New", "Save", "Browse", and "Load" buttons, for example. In this way, a user may personally customize a shape recognition device to perform in a desired manner to meet a desired application.

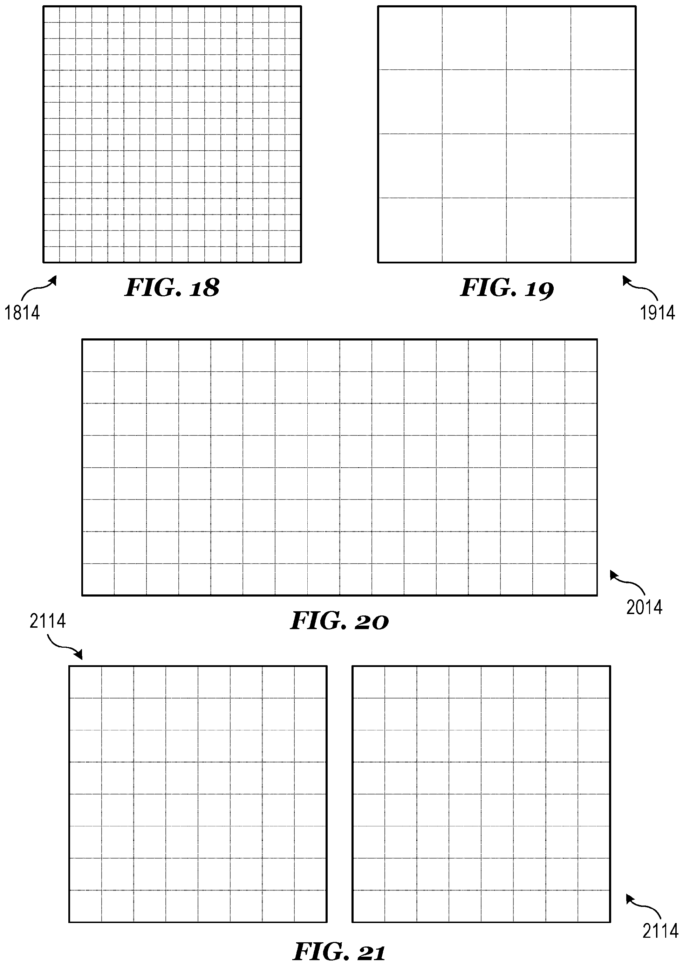

FIGS. 18-21 illustrate four examples of ToF data that demonstrate broad concepts of how a ToF frame may be divided into zones. Referring to FIG. 18, a ToF frame **1814** is divided into 256 zones arranged as a 16 by 16 array. In contrast, a ToF frame may be divided into a smaller number of zones, as shown in FIG. 19, where a ToF frame **1914** is divided into 16 zones arranged as a 4 by 4 array.

There is no requirement that the field of view of a multizone ToF device be square. For example, referring to FIG. 20, a ToF frame **2014** is divided into 128 zones arranged as a 16 by 8 array. In some cases, multiple arrays of photodetectors may be utilized to create a larger field of view. This is shown in FIG. 21, where two ToF frames **2114** are divided into 128 zones arranged as two 8 by 8 arrays.

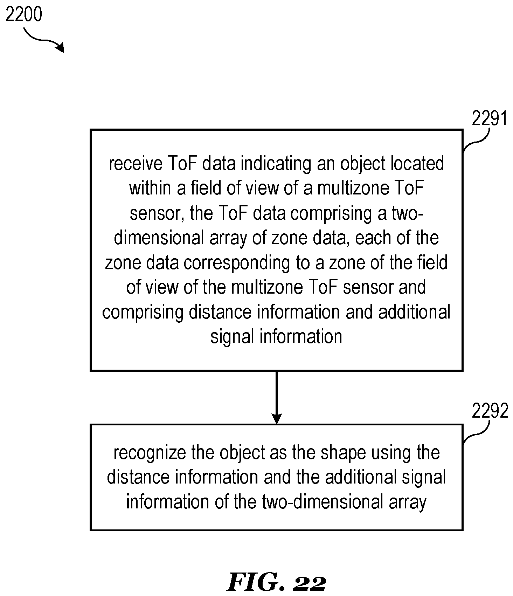

FIG. 22 illustrates an example method of recognizing a shape in accordance with embodiments of the invention. The method of FIG. 22 may be combined with other methods and performed using the systems and devices as described herein. For example, the method of FIG. 22 may be combined with any of the embodiments of FIGS. 1-21 and 23. Although shown in a logical order, the arrangement and numbering of the steps of FIG. 22 are not intended to be limited. The method steps of FIG. 22 may be performed in any suitable order or concurrently with one another as may be apparent to a person of skill in the art.

Referring to FIG. 22, a method **2200** of recognizing a shape using a multizone ToF sensor includes a step **2291** of receiving ToF data indicating an object located within a field of view of the multizone ToF sensor, the ToF data comprising a two-dimensional array of zone data, each of the zone data corresponding to a zone of the field of view of the multizone ToF sensor and comprising distance information and additional signal information.

In a step **2292,** the object is recognized as the shape using the distance information and the additional signal information of the two-dimensional array. Step **2291** and step **2292** may be performed by a processor of a shape recognition device including the multizone ToF sensor.

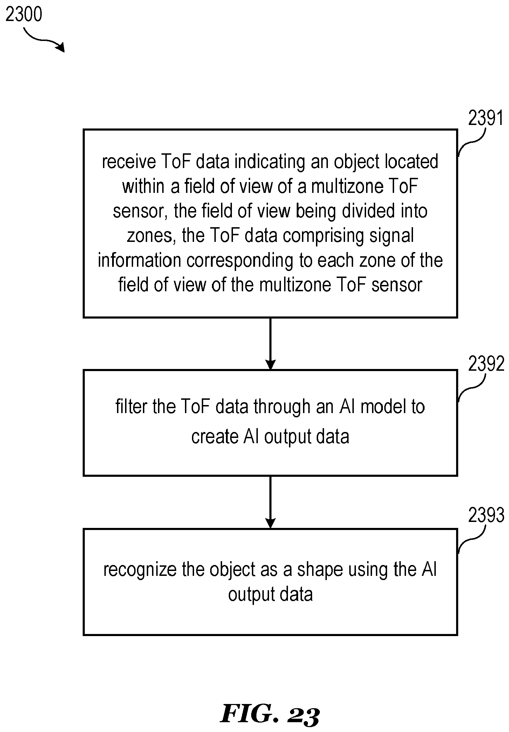

FIG. 23 illustrates another example method of recognizing a shape in accordance with embodiments of the invention. The method of FIG. 23 may be combined with other methods and performed using the systems and devices as described herein. For example, the method of FIG. 23 may be combined with any of the embodiments of FIGS. 1-22. Although shown in a logical order, the arrangement and numbering of the steps of FIG. 23 are not intended to be limited. The method steps of FIG. 23 may be performed in any suitable order or concurrently with one another as may be apparent to a person of skill in the art.

Referring to FIG. 23, a method **2300** recognizing a shape using a multizone ToF sensor includes a step **2391** of receiving ToF data indicating an object located within a field of view of the multizone ToF sensor, the field of view being divided into zones, the ToF data comprising signal information corresponding to each zone of the field of view of the multizone ToF sensor.

The ToF data is filtered through an AI model to create AI output data in step **2392.** Step **2392** includes recognizing the object as the shape using the AI output data. Steps **2391, 2392,** and **2393** may be performed by a processor of a shape recognition device including the multizone ToF sensor.

Example embodiments of the invention are summarized here. Other embodiments can also be understood from the entirety of the specification as well as the claims filed herein.

Example 1. A method of recognizing a shape using a multizone ToF sensor, the method including: receiving, by a processor, ToF data indicating an object located within a field of view of the multizone ToF sensor, the ToF data including a two-dimensional array of zone data, each of the zone data corresponding to a zone of the field of view of the multizone ToF sensor and including distance information and additional signal information; and recognizing, by the processor, the object as the shape using the distance information and the additional signal information of the two-dimensional array.

Example 2. The method of example 1, where each dimension of the two-dimensional array is less than or equal to 16.

Example 3. The method of example 2, where the two-dimensional array is an 8 by 8 array.

Example 4. The method of one of examples 1 to 3, where the ToF data corresponds to a single frame measured by the multizone ToF sensor.

Example 5. The method of one of examples 1 to 4, further including: determining, by the processor, the closest zone in the ToF data using the distance information of the zone data; and ignoring the ToF data if the closest zone is outside a predetermined distance range.

Example 6. The method of one of examples 1 to 5, further including: determining, by the processor, the closest zone in the ToF data using the distance information of the zone data; and ignoring the ToF data if the closest zone is outside a valid area of a frame of the ToF data, the valid area including a predetermined range for both dimensions of the two-dimensional array.

Example 7. The method of one of examples 1 to 6, further including: determining, by the processor, the closest zone in the ToF data using the distance information of the zone data; invalidating, by the processor, each zone that is farther from the closest zone than a predetermined gap distance; and setting, by the processor, the zone data of each of the invalid zones to default values.

Example 8. A method of recognizing a shape using a multizone ToF sensor, the method including: receiving, by a processor, ToF data indicating an object located within a field of view of the multizone ToF sensor, the field of view being divided into zones, the ToF data including signal information corresponding to each zone of the field of view of the multizone ToF sensor; filtering, by the processor, the ToF data through an AI model to create AI output data; and recognizing, by the processor, the object as the shape using the AI output data.

Example 9. The method of example 8, where the multizone ToF sensor includes no more than 256 zones.

Example 10. The method of example 9, where the zones of the field of view of the multizone ToF sensor are arranged as a single 8 by 8 array.

Example 11. The method of one of examples 8 to 10, where the ToF data corresponds to a single frame measured by the multizone ToF sensor.

Example 12. The method of one of examples 8 to 11, further including: measuring, by the multizone ToF sensor, new ToF data of a user displaying a new shape; labeling the new ToF data as the new shape; and training the AI model using the labeled new ToF data.

Example 13. The method of one of examples 8 to 12, where the AI model is a convolutional neural network (CNN).

Example 14. The method of example 13, where the CNN includes only one convolutional layer.

Example 15. The method of one of examples 13 and 14, where the CNN includes only one pooling layer.

Example 16. The method of one of examples 13 to 15, where the CNN includes only one fully connected layer.

Example 17. The method of one of examples 8 to 16, where the signal information corresponding to each zone includes a distance value determined according to raw signal data measured by the multizone ToF sensor.

Example 18. The method of example 17, where the signal information corresponding to each zone further includes the raw signal data.

Example 19. The method of one of examples 17 and 18, where the signal information corresponding to each zone further includes a signal peak value.

Example 20. The method of one of examples 8 to 19, where the signal information corresponding to each zone is raw signal data measured by the multizone ToF sensor.

Example 21. A shape recognition device including: a multizone ToF sensor including a field of view divided into zones and configured to generate ToF data indicating an object located within the field of view of the multizone ToF sensor; and a processor coupled to the multizone ToF sensor, the processor being configured to receive the ToF data from the multizone ToF sensor, the ToF data including signal information corresponding to each zone of the field of view of the multizone ToF sensor, filter the ToF data through an AI model to create AI output data, and recognize the object as a shape using the AI output data.

Example 22. The shape recognition device of example 21, where the multizone ToF sensor includes no more than 256 zones.

Example 23. The shape recognition device of example 22, where the zones of the field of view of the multizone ToF sensor are arranged as a single 8 by 8 array.

Example 24. The shape recognition device of one of examples 21 to 23, where the processor is a microcontroller.

Example 25. The shape recognition device of one of examples 21 to 24, where the processor includes a nonvolatile integrated memory, and where the processor is further configured to filter the ToF data and identify the object as the shape by executing instructions stored entirely in the nonvolatile integrated memory.

Example 26. The shape recognition device of one of examples 21 to 25, where the multizone ToF sensor is a direct ToF sensor.

Example 27. The shape recognition device of one of examples 21 to 26, where the shape recognition device is a smart phone.

Example 28. The shape recognition device of one of examples 21 to 27, where the shape recognition device is a wearable device.

Example 29. The shape recognition device of example 28, where the wearable device is an earbud.

While this invention has been described with reference to illustrative embodiments, this description is not intended to be construed in a limiting sense. Various modifications and combinations of the illustrative embodiments, as well as other embodiments of the invention, will be apparent to persons skilled in the art upon reference to the description. It is therefore intended that the appended claims encompass any such modifications or embodiments.

## Claims

1. A method of recognizing a shape using a multizone time-of-flight (ToF) sensor (102, 202, 502, 602, 1302, 1402, 1502), the method comprising:
receiving, by a processor (104, 204, 504, 1304, 1404), ToF data (400) indicating an object (220, 620) located within a field of view (210, 610) of the multizone ToF sensor (102, 202, 502, 602, 1302, 1402, 1502), the ToF data (400) comprising a two-dimensional array of zone data, each of the zone data corresponding to a zone (212, 412, 612, 912) of the field of view (210, 610) of the multizone ToF sensor (102, 202, 502, 602, 1302, 1402, 1502) and comprising distance information (32) and additional signal information; and
recognizing, by the processor (104, 204, 504, 1304, 1404), the object (220, 620) as the shape using the distance information (32) and the additional signal information of the two-dimensional array.

2. The method of claim 1, wherein each dimension of the two-dimensional array is less than or equal to 16.

3. The method of claim 2, wherein the two-dimensional array is an 8 by 8 array.

4. The method of claim 1, wherein the ToF data (400) corresponds to a single frame (414, 614, 914, 1814, 1914, 2014) measured by the multizone ToF sensor (102, 202, 502, 602, 1302, 1402, 1502).

5. The method of claim 1, further comprising:
determining, by the processor (104, 204, 504, 1304, 1404), the closest zone (61) in the ToF data (400) using the distance information (32) of the zone data; and
ignoring the ToF data (400) if the closest zone (61) is outside a predetermined distance range (63, 64).

6. The method of claim 1, further comprising:
determining, by the processor (104, 204, 504, 1304, 1404), the closest zone (61) in the ToF data (400) using the distance information (32) of the zone data; and
ignoring the ToF data (400) if the closest zone (61) is outside a valid area (65) of a frame of the ToF data (400), the valid area (65) comprising a predetermined range for both dimensions of the two-dimensional array.

7. The method of claim 1, further comprising:
determining, by the processor (104, 204, 504, 1304, 1404), the closest zone (61) in the ToF data (400) using the distance information (32) of the zone data;
invalidating, by the processor (104, 204, 504, 1304, 1404), each zone (212, 412, 612, 912) that is farther from the closest zone (61) than a predetermined gap distance (66); and
setting, by the processor (104, 204, 504, 1304, 1404), the zone data of each of the invalid zones (68) to default values.

8. A method of recognizing a shape using a multizone time-of-flight (ToF) sensor (102, 202, 502, 602, 1302, 1402, 1502), the method comprising:
receiving, by a processor (104, 204, 504, 1304, 1404), ToF data (400) indicating an object (220, 620) located within a field of view (210, 610) of the multizone ToF sensor (102, 202, 502, 602, 1302, 1402, 1502), the field of view (210, 610) being divided into zones (212, 412, 612, 912), the ToF data (400) comprising signal information corresponding to each zone (212, 412, 612, 912) of the field of view (210, 610) of the multizone ToF sensor (102, 202, 502, 602, 1302, 1402, 1502);
filtering, by the processor (104, 204, 504, 1304, 1404), the ToF data (400) through an artificial intelligence (AI) model (1000, 1100, 1200) to create AI output data (1097, 1197, 1297); and
recognizing, by the processor (104, 204, 504, 1304, 1404), the object (220, 620) as the shape using the AI output data (1097, 1197, 1297).

9. The method of claim 8, wherein the ToF data (400) corresponds to a single frame (414, 614, 914, 1814, 1914, 2014) measured by the multizone ToF sensor (102, 202, 502, 602, 1302, 1402, 1502).

10. The method of claim 8, further comprising:
measuring, by the multizone ToF sensor (102, 202, 502, 602, 1302, 1402, 1502), new ToF data (400) of a user displaying a new shape;
labeling the new ToF data (400) as the new shape; and
training the AI model (1000, 1100, 1200) using the labeled new ToF data.

11. The method of claim 8, wherein the AImodel (1000, 1100, 1200) is a convolutional neural network (CNN) (1100, 1200).

12. The method of claim 8, wherein the signal information corresponding to each zone (212, 412, 612, 912) comprises a distance value determined according to raw signal data (300) measured by the multizone ToF sensor (102, 202, 502, 602, 1302, 1402, 1502).

13. The method of claim 12, wherein the signal information corresponding to each zone (212, 412, 612, 912) further comprises the raw signal data (300).

14. The method of claim 12, wherein the signal information corresponding to each zone (212, 412, 612, 912) further comprises a signal peak value (34).

15. The method of claim 8, wherein the signal information corresponding to each zone (212, 412, 612, 912) is raw signal data (300) measured by the multizone ToF sensor (102, 202, 502, 602, 1302, 1402, 1502).

16. A shape recognition device (101, 201, 1301, 1401) comprising:
a multizone time-of-flight (ToF) sensor (102, 202, 502, 602, 1302, 1402, 1502) comprising a field of view (210, 610) divided into zones (212, 412, 612, 912) and configured to generate ToF data (400) indicating an object (220, 620) located within the field of view (210, 610) of the multizone ToF sensor (102, 202, 502, 602, 1302, 1402, 1502); and
a processor (104, 204, 504, 1304, 1404) coupled to the multizone ToF sensor (102, 202, 502, 602, 1302, 1402, 1502), the processor (104, 204, 504, 1304, 1404) being configured to
receive the ToF data (400) from the multizone ToF sensor (102, 202, 502, 602, 1302, 1402, 1502), the ToF data (400) comprising signal information corresponding to each zone (212, 412, 612, 912) of the field of view (210, 610) of the multizone ToF sensor (102, 202, 502, 602, 1302, 1402, 1502),
filter the ToF data (400) through an artificial intelligence (AI) model (1000, 1100, 1200) to create AI output data (1097, 1197, 1297), and
recognize the object (220, 620) as a shape using the AI output data (1097, 1197, 1297).

17. The shape recognition device (101, 201, 1301, 1401) of claim 16, wherein the zone (212, 412, 612, 912)s of the field of view (210, 610) of the multizone ToF sensor (102, 202, 502, 602, 1302, 1402, 1502) are arranged as a single 8 by 8 array.

18. The shape recognition device (101, 201, 1301, 1401) of claim 16, wherein the processor (104, 204, 504, 1304, 1404) is a microcontroller (1304).

19. The shape recognition device (101, 201, 1301, 1401) of claim 18,
wherein the processor (104, 204, 504, 1304, 1404) comprises a nonvolatile integrated memory (1305), and
wherein the processor (104, 204, 504, 1304, 1404) is further configured to filter the ToF data (400) and identify the object (220, 620) as the shape by executing instructions stored entirely in the nonvolatile integrated memory (1305).

20. The shape recognition device (101, 201, 1301, 1401) of claim 16, wherein the multizone ToF sensor (102, 202, 502, 602, 1302, 1402, 1502) is a direct ToF sensor (1302).
